# EUROPÄISCHE PATENTANMELDUNG

(11) **EP 4 753 096 A1**
(43) Veröffentlichungstag der Anmeldung: **03.06.2026**
(21) Anmeldenummer: 25204443.3
(22) Anmeldetag: 24.09.2025
(51) Int. Cl.: H02J 3/32, H02J 3/38, H02J 3/388, H02J 3/46

(54) **VERFAHREN ZUM BETRIEB EINER NETZERSATZANLAGE, NETZERSATZANLAGE UND INSELNETZ MIT NETZERSATZANLAGE**

(30) Priorität: 28.11.2024 DE 102024135313
(71) Anmelder: Westnetz GmbH, 44139 Dortmund (DE)
(72) Erfinder: Hetzius, Stefan, 54568 Gerolstein (DE)
(74) Vertreter: Bals & Vogel Patentanwälte PartGmbB

(57) **Zusammenfassung**

Die Erfindung betrifft ein Verfahren (100) zum Betrieb einer Netzersatzanlage (10) zur, insbesondere temporären, Bereitstellung einer elektrischen Nutzleistung (P_{el,Ges}) in einem Inselnetz (50), umfassend wenigstens einen Motorgenerator (12) zur Bereitstellung einer ersten elektrischen Leistung (P_{el,1}) sowie wenigstens ein Unterstützungsaggregat (13) zur Bereitstellung einer zweiten elektrischen Leistung (P_{el,2}), wobei das Unterstützungsaggregat (13) wenigstens einen elektrischen Energiespeicher (13.1) zur Bereitstellung der zweiten elektrischen Leistung (P_{el,2}) umfasst, das Verfahren (100) umfassend:
- Bereitstellen (110) einer ersten elektrischen Leistung (P_{el,1}) durch den Motorgenerator (12),
- Erfassen (120) einer Netzfrequenz (f) in dem Inselnetz (50), insbesondere durch wenigstens einen Spannungssensor (15),
- Bereitstellen (130) einer zweiten elektrischen Leistung (P_{el,2}) durch das Unterstützungsaggregat (13), wenn die Netzfrequenz (f) einen oberen Netzfrequenzgrenzwert (f_{G,O}) erreicht oder unterschreitet.

## Beschreibung

Die Erfindung betrifft ein Verfahren zum Betrieb einer Netzersatzanlage, eine Netzersatzanlage, ein Inselnetz, ein Computerprogrammprodukt, ein computerlesbares Speichermedium sowie ein Datenträgersignal.

Es ist bekannt, dass Netzersatzanlagen zur, zumindest temporären, elektrischen Energieversorgung von Verbrauchern in Inselnetzen eingesetzt werden können. Dabei kann während der Energieversorgung des Inselnetzes durch eine Netzersatzanlage die anliegende elektrische Last, bspw. aufgrund einer veränderlichen Anzahl von Verbrauchern, variieren. Insbesondere plötzliche Steigerungen der elektrischen Last können zu einer Verringerung der in dem Inselnetz anliegenden Netzfrequenz führen. Sinkt die Netzfrequenz signifikant ab, kann dies eine Abschaltung der Netzersatzanlage bzw. des gesamten Inselnetzes erfordern.

Um dem entgegenzuwirken, kann bei einem Absinken der Netzfrequenz die durch die Netzersatzanlage bereitgestellte elektrische Leistung erhöht werden, um die Netzfrequenz zu stabilisieren. Diesbezüglich hat sich das Problem gezeigt, dass das Regelverhalten von Motorgeneratoren je nach Typ sehr unterschiedlich sein kann und eine Steigerung der durch die Netzersatzanlage bereitgestellten elektrischen Leistung mitunter zu lange dauert, um im Falle eines Absinkens der Netzfrequenz eine Notabschaltung zu verhindern.

Es ist daher eine Aufgabe der vorliegenden Erfindung, wenigstens einen der voranstehend beschriebenen Nachteile zumindest teilweise zu überwinden. Insbesondere ist es Aufgabe der Erfindung ein Verfahren zum Betrieb einer Netzersatzanlage sowie eine Netzersatzanlage bereitzustellen, durch die ein sicherer und/oder zuverlässiger und/oder umweltverträglicherer Betrieb eines Inselnetzes, auch bei einer Lastaufschaltung in dem Inselnetz realisiert werden kann.

Die voranstehende Aufgabe wird gelöst durch ein Verfahren zum Betrieb einer Netzersatzanlage gemäß einem ersten Aspekt der vorliegenden Erfindung, durch eine Netzersatzanlage gemäß einem zweiten Aspekt der vorliegenden Erfindung, durch ein Inselnetz gemäß einem dritten Aspekt der vorliegenden Erfindung, durch ein Computerprogrammprodukt gemäß einem vierten Aspekt der vorliegenden Erfindung, durch ein computerlesbares Speichermedium gemäß einem fünften Aspekt der vorliegenden Erfindung sowie durch ein Datenträgersignal gemäß einem sechsten Aspekt der vorliegenden Erfindung. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Netzersatzanlage und/oder im Zusammenhang mit dem erfindungsgemäßen Inselnetz und/oder im Zusammenhang mit dem erfindungsgemäßen Computerprogrammprodukt und/oder im Zusammenhang mit dem erfindungsgemäßen computerlesbaren Speichermedium und/oder im Zusammenhang mit dem erfindungsgemäßen Datenträgersignal und jeweils umgekehrt, sodass bezüglich der Offenbarung zu den einzelnen Erfindungsaspekten stets wechselseitig Bezug genommen wird bzw. werden kann.

Gemäß einem ersten Aspekt betrifft die vorliegende Erfindung ein Verfahren zum Betrieb einer Netzersatzanlage zur, insbesondere temporären, Bereitstellung einer elektrischen Nutzleistung in einem Inselnetz, umfassend wenigstens einen Motorgenerator zur Bereitstellung einer ersten elektrischen Leistung sowie wenigstens ein Unterstützungsaggregat zur Bereitstellung einer zweiten elektrischen Leistung, wobei das Unterstützungsaggregat wenigstens einen elektrischen Energiespeicher zur Bereitstellung der zweiten elektrischen Leistung umfasst, das Verfahren umfassend:
- Bereitstellen einer ersten elektrischen Leistung durch den Motorgenerator,
- Erfassen einer Netzfrequenz in dem Inselnetz, insbesondere durch wenigstens einen Spannungssensor,
- Bereitstellen einer zweiten elektrischen Leistung durch das Unterstützungsaggregat, wenn die Netzfrequenz einen oberen Netzfrequenzgrenzwert erreicht oder unterschreitet.

Es kann in Bezug auf die vorliegende Erfindung vorgesehen sein, dass zumindest einzelne Schritte des Verfahrens wiederkehrend und/oder, zumindest teilweise, simultan ausgeführt werden. Zusätzlich oder alternativ ist es denkbar, dass die Schritte in der angegebenen Reihenfolge ausgeführt werden und/oder dass es sich bei dem Verfahren um ein computerimplementiertes Verfahren handelt.

**In** anderen Worten wird ein Verfahren zum Betrieb einer Netzersatzanlage vorgeschlagen, wobei die Netzersatzanlage einer, zumindest temporären, Bereitstellung einer elektrischen Nutzleistung in einem Inselnetz dient. Eine Netzersatzanlage dient der Notstromversorgung von einem oder mehreren elektrischen Verbrauchern innerhalb eines in sich geschlossenen Inselnetzes. Eine solche Netzersatzanlage wird insbesondere dann in Betrieb genommen, wenn eine Energieversorgung des Inselnetzes über das herkömmliche Energieversorgungsnetz, zumindest temporär, nicht vorgesehen oder nicht möglich ist bzw. ausfällt.

Die Netzersatzanlage umfasst einen Motorgenerator zur Bereitstellung einer ersten elektrischen Leistung sowie ferner ein Unterstützungsaggregat zur Bereitstellung einer zweiten elektrischen Leistung. Vorgesehen ist, dass das Unterstützungsaggregat wenigstens einen elektrischen Energiespeicher umfasst, aus dem die zweite elektrische Leistung durch das Unterstützungsaggregat bereitgestellt wird. Die durch die Netzersatzanlage bereitgestellte elektrische Nutzleistung ergibt sich bevorzugt aus der Summe der durch den Motorgenerator bereitgestellten ersten elektrischen Leistung sowie der durch das Unterstützungsaggregat bereitgestellten zweiten elektrischen Leistung.

Erfindungsgemäß ist vorgesehen, dass durch den Motorgenerator eine erste elektrische Leistung bereitgestellt wird. Ferner ist vorgesehen, dass, insbesondere durch einen Spannungssensor, eine Netzfrequenz in dem Inselnetz erfasst wird. Zum Erfassen der Netzfrequenz kann insbesondere ein zeitlicher Verlauf der elektrischen Spannung in dem Inselnetz durch den Spannungssensor, insbesondere zeitdiskret oder zeitkontinuierlich, überwacht bzw. erfasst werden. Bei dem Inselnetz kann es sich bevorzugt um ein Wechselspannungsnetz handeln, wobei die Netzfrequenz eine Frequenz der in dem Inselnetz anliegenden, insbesondere sinusförmigen und/oder dreiphasigen, Wechselspannung ist.

Ferner ist in Bezug auf die vorliegende Erfindung vorgesehen, dass eine zweite elektrische Leistung durch das Unterstützungsaggregat, insbesondere nur dann, bereitgestellt wird, wenn die Netzfrequenz einen oberen Netzfrequenzgrenzwert erreicht oder unterschreitet. Hierzu kann vorgesehen sein, dass die erfasste Netzfrequenz, insbesondere durch eine Steuereinheit, mit dem oberen Netzfrequenzgrenzwert verglichen wird und ein Vergleichsergebnis bereitgestellt wird, wobei das Vergleichsergebnis charakteristisch dafür ist, ob die Netzfrequenz den oberen Netzfrequenzgrenzwert erreicht oder unterschreitet bzw. dies nicht tut.

Es kann bevorzugt vorgesehen sein, dass die Steuerung einer Bereitstellung der zweiten elektrischen Leistung durch das Unterstützungsaggregat durch eine Steuereinheit erfolgt. Insbesondere kann dies umfassen, dass durch die Steuereinheit steuerbar ist bzw. gesteuert wird, ob eine zweite elektrische Leistung bereitgestellt wird oder nicht und wie hoch diese zweite elektrische Leistung ist.

**Im** Rahmen der Erfindung wurde erkannt, dass Lastschwankungen in dem Inselnetz Einfluss auf die Netzfrequenz haben können. Insbesondere kann bei einer elektrischen Lastaufschaltung, also einer Steigerung der anliegenden Last, die Netzfrequenz absinken. Wird ein solches Absinken der Netzfrequenz auf bzw. unter einen oberen Netzfrequenzwert detektiert, so wird erfindungsgemäß, zusätzlich zu einer durch den Motorgenerator bereitgestellten ersten elektrischen Leistung, eine zweite elektrische Leistung durch das Unterstützungsaggregat zur Stabilisierung der Netzfrequenz bereitgestellt. Da die Bereitstellung der zweiten elektrischen Leistung aus einem elektrischen Energiespeicher erfolgt, kann ein sehr schnelles Regelverhalten bei dem Unterstützungsaggregat realisiert werden. Die zusätzlich benötigte zweite elektrische Leistung kann quasi ohne zeitliche Verzögerung in dem Inselnetz bereitgestellt werden, wodurch eine Notabschaltung in dem Inselnetz zuverlässig vermieden werden kann. Durch die zusätzliche Bereitstellung der zweiten elektrischen Leistung durch das Unterstützungsaggregat kann die Netzfrequenz in dem Inselnetz, insbesondere auf oder im Wesentlichen auf eine Nennfrequenz, angehoben bzw. stabilisiert werden, bis die durch den Motorgenerator bereitgestellte elektrische Leistung dem aktuellen Leistungsbedarf entsprechend nachgeregelt wurde. So können auch Motorgeneratoren mit einem vergleichsweise langsamen Regelverhalten eingesetzt werden, ohne dass eine zuverlässige Energieversorgung in dem Inselnetz gefährdet wird. Dies betrifft insbesondere den Einsatz von Motorgeneratoren mit Wasserstoffverbrennungsmotoren, welche bspw. gegenüber Dieselverbrennungsmotoren ein deutlich trägeres bzw. langsameres Regelverhalten aufweisen.

Im Rahmen der Erfindung kann bevorzugt vorgesehen sein, dass der obere Netzfrequenzgrenzwert kleiner ist als eine Nennnetzfrequenz des Inselnetzes. Eine Nennnetzfrequenz des Inselnetzes soll verstanden werden als eine Netzfrequenz, auf der das Inselnetz bestimmungsgemäß betrieben wird. Die Nennnetzfrequenz kann bevorzugt 50 Hz oder 60 Hz betragen. Eine Nennnetzspannung, also eine elektrische Spannung, auf der das Inselnetz bestimmungsgemäß betrieben wird, kann bevorzugt 230 V oder 110 V, bei Drehstrom bzw. einer Dreiphasenwechselspannung insbesondere 230/400V bzw. 110/190V betragen.

Insbesondere kann vorgesehen sein, dass der obere Netzfrequenzgrenzwert zwischen 98 % und 99,8 %, insbesondere zwischen 98,5 % und 99,6 %, der Nennnetzfrequenz beträgt. Bevorzugt kann vorgesehen sein, dass der obere Netzfrequenzgrenzwert zwischen 49,2 Hz und 49,9 Hz, insbesondere zwischen 49,4 Hz und 49,7 Hz beträgt. Besonders bevorzugt kann der obere Nennnetzfrequenzgrenzwert 99 % der Nennnetzfrequenz des Inselnetzes bzw. 49,5 Hz betragen. Eine solche Wahl des oberen Netzfrequenzgrenzwerts und eine daraus resultierende, frühzeitige Zuschaltung des Unterstützungsaggregats bei einem Absinken der Netzfrequenz hat sich als vorteilhaft in Bezug auf einen stabilen Betrieb eines Inselnetzes erwiesen.

Im Rahmen der Erfindung ist es denkbar, dass die Höhe der durch das Unterstützungsaggregat bereitgestellten zweiten elektrischen Leistung in Abhängigkeit der Netzfrequenz bestimmt wird. Insbesondere kann vorgesehen sein, dass die zweite elektrische Leistung mit abnehmender Netzfrequenz, insbesondere linear bzw. mit einem dem Verbrennungsmotor angepassten Regelverhalten, gesteigert wird. Durch dieses Vorgehen ergibt sich eine bedarfsgerechte Anpassung der durch das Unterstützungsaggregat bereitgestellten zweiten elektrischen Leistung in Abhängigkeit der Netzfrequenz und einem Absinken der Netzfrequenz wird durch eine dynamische Erhöhung der zweiten elektrischen Leistung konsequent entgegengewirkt.

Es kann im Rahmen der Erfindung vorgesehen sein, dass die zweite elektrische Leistung bei einem unteren Netzfrequenzgrenzwert ihr Maximum erreicht. In anderen Worten kann vorgesehen sein, dass ausgehend von dem oberen Netzfrequenzgrenzwert die zweite elektrische Leistung mit abnehmender Netzfrequenz in dem Inselnetz weiter gesteigert wird, bis die zweite elektrische Leistung bei dem Erreichen oder Unterschreiten eines unteren Netzfrequenzgrenzwerts ihr Maximum erreicht. Das Maximum der zweiten elektrischen Leistung kann dabei bevorzugt der maximal durch das Unterstützungsaggregat bereitstellbaren Leistung entsprechen. Bevorzugt ist der untere Netzfrequenzgrenzwert kleiner als der obere Netzfrequenzgrenztwert. Zusätzlich oder alternativ kann vorgesehen sein, dass der untere Netzfrequenzgrenzwert derjenigen Netzfrequenz entspricht, bei deren Erreichen oder Unterschreiten eine Notabschaltung der Netzersatzanlage bzw. des Inselnetzes erfolgt.

In diesem Zusammenhang hat es sich als vorteilhaft erwiesen, wenn der untere Netzfrequenzgrenzwert zwischen 93 % und 95 %, bevorzugt zwischen 93,5 % und 94,5 %, besonders bevorzugt 94 %, der Nennnetzfrequenz des Inselnetzes beträgt. Insbesondere kann der untere Netzfrequenzgrenzwert zwischen 46,5 Hz und 48 Hz, insbesondere zwischen 46,8 Hz und 47,5 Hz betragen. Besonders bevorzugt kann der untere Netzfrequenzgrenzwert 47 Hz betragen.

Es ist ferner denkbar, dass ferner Folgendes umfasst ist:
- Durchführen einer Notabschaltung der Netzersatzanlage, wenn die Netzfrequenz einen unteren Netzfrequenzgrenzwert erreicht oder unterschreitet, insbesondere durch eine Steuereinheit.

Sollte die durch das Unterstützungsaggregat bereitgestellte bzw. bereitstellbare zweite elektrische Leistung nicht ausreichend sein, um die Netzfrequenz in dem Inselnetz zu stabilisieren, so können die in dem Netz befindlichen Komponenten durch eine Notabschaltung geschützt werden. Insbesondere kann im Rahmen einer Notabschaltung eine elektrische Trennung der Netzersatzanlage von dem Inselnetz erfolgen. Zusätzlich oder alternativ kann die Notabschaltung bspw. die Trennung einer Wirkverbindung zwischen einem Verbrennungsmotor und einem Generator des Motorgenerators und/oder ein Unterbinden einer Bereitstellung der zweiten elektrischen Leistung durch das Unterstützungsaggregat umfassen.

Auch ist es denkbar, dass ferner Folgendes umfasst ist:
- Aufladen des elektrischen Energiespeichers in einem Zeitraum, in dem die Netzfrequenz größer oder gleich dem oberen Netzfrequenzgrenzwert ist, insbesondere durch ein Ladegerät des Unterstützungsaggregats.

Durch das Aufladen des Energiespeichers des Unterstützungsaggregats während einem störungsfreien Netzbetrieb wird eine Verfügbarkeit des Unterstützungsaggregats bei zukünftigen Schwankungen der Netzfrequenz sichergestellt. Das Initiieren und/oder Abbrechen einer Aufladung des Energiespeichers kann bevorzugt durch eine Steuereinheit erfolgen. Insbesondere kann die Steuereinheit einen Ladezustand bei dem Energiespeicher abfragen bzw. feststellen und basierend auf dem Ladezustand einen Ladevorgang initiieren oder nicht. Insbesondere kann ein Ladezustand erst dann initiiert werden, wenn der Ladezustand einen festgelegten Grenzwert erreicht oder unterschreitet. Hierdurch kann der Energiespeicher geschont und eine Lebensdauer des Energiespeichers verlängert werden.

Gemäß einem zweiten Aspekt betrifft die vorliegende Erfindung ferner eine Netzersatzanlage zur, insbesondere temporären, Bereitstellung einer elektrischen Nutzleistung in einem Inselnetz, umfassend wenigstens einen Motorgenerator zur Bereitstellung einer ersten elektrischen Leistung sowie wenigstens ein Unterstützungsaggregat zur Bereitstellung einer zweiten elektrischen Leistung, wobei das Unterstützungsaggregat wenigstens einen elektrischen Energiespeicher, insbesondere wenigstens einen Akku bzw. wenigstens eine Batterie, zur Bereitstellung der zweiten elektrischen Leistung umfasst.

Dadurch, dass die zweite elektrische Leistung aus einem elektrischen Energiespeicher bereitgestellt wird, ergibt sich ein besonders schnelles Ansprechverhalten bzw. Regelverhalten des Unterstützungsaggregats. Schwankungen bzw. Abfällen der Netzfrequenz in dem Inselnetz kann aus diesem Grund besonders agil entgegengewirkt werden. Dies ermöglicht es auch Verbrennungsmotoren mit einem langsameren Regelverhalten bei dem Motorgenerator des Unterstützungsaggregats einzusetzen, ohne dass ein sicherer und zuverlässiger Betrieb des Inselnetzes beeinträchtigt wird. Insbesondere kann hierdurch ein Einsatz von Wasserstoffverbrennungsmotoren bei einer Netzersatzanlage realisiert werden, welche eine deutlich höhere Umweltverträglichkeit aufweisen als Verbrennungsmotoren, welche fossile Kraftstoffe, insbesondere Benzin oder Diesel, verbrennen.

Im Rahmen der Erfindung ist es bevorzugt denkbar, dass die Netzersatzanlage dazu ausgebildet ist, gemäß einem Verfahren gemäß dem ersten Aspekt der vorliegenden Erfindung betrieben zu werden. Damit ergeben sich in Bezug auf eine solche Netzersatzanlage die gleichen Vorteile, wie sie bereits in Bezug auf ein erfindungsgemäßes Verfahren beschrieben worden sind.

Ferner kann es im Rahmen der Erfindung vorgesehen sein, dass der Motorgenerator einen Verbrennungsmotor sowie einen Generator umfasst. Bevorzugt können der Verbrennungsmotor und der Generator über wenigstens eine durch den Verbrennungsmotor antreibbare Welle gekoppelt sein. Insbesondere kann der Generator als ein, insbesondere dreiphasiger, Wechselspannungsgenerator oder Drehstromgenerator und/oder der Verbrennungsmotor als ein Wasserstoffverbrennungsmotor ausgebildet ist. Insbesondere die Verwendung eines Wasserstoffverbrennungsmotors hat sich in Bezug auf die vorliegende Erfindung als besonders vorteilhaft erwiesen.

In Bezug auf die vorliegende Erfindung ist es vorstellbar, dass das Unterstützungsaggregat wenigstens einen Wechselrichter zur Umwandlung einer durch den elektrischen Energiespeicher bereitgestellten Gleichspannung in Wechselspannung umfasst. In anderen Worten kann vorgesehen sein, dass eine durch den Energiespeicher bereitstellbare elektrische Spannung eine Gleichspannung bzw. ein durch den Energiespeicher bereitstellbarer elektrischer Strom ein Gleichstrom ist. Bevorzugt kann in diesem Fall vorgesehen sein, dass das Unterstützungsaggregat einen Wechselrichter zur Umwandlung der durch den elektrischen Energiespeicher bereitgestellten Gleichspannung bzw. des bereitgestellten Gleichstroms in eine Wechselspannung bzw. einen Wechselstrom oder eine Dreiphasenwechselspannung bzw. einen Drehstrom umfasst.

Ferner ist es vorstellbar, dass wenigstens eine Steuereinheit umfasst ist, wobei durch die Steuereinheit eine Bereitstellung der zweiten elektrischen Leistung aktivierbar und deaktivierbar ist. Wenigstens eine Steuereinheit kann Mittel zur Datenverarbeitung umfassen, wobei die Mittel zur Datenverarbeitung bevorzugt wenigstens einen Prozessor und/oder wenigstens einen Arbeitsspeicher und/oder wenigstens einen, insbesondere nichtflüchtigen, Datenspeicher umfassen.

Es kann bevorzugt vorgesehen sein, dass wenigstens eine Steuereinheit, zumindest temporär, in eine Signal- bzw. Kommunikationsverbindung mit dem Unterstützungsaggregat, insbesondere dem elektrischen Energiespeicher und/oder einem Wechselrichter, und/oder dem Motorgenerator, insbesondere einem Verbrennungsmotor und/oder Generator, und/oder wenigstens einem Spannungssensor bringbar ist. Auf diese Weise können Daten und/oder Steuersignale zwischen den jeweiligen Komponenten übermittelt werden.

Im Rahmen der Erfindung kann es von Vorteil sein, dass wenigstens ein Spannungssensor zur Erfassung einer Netzfrequenz in dem Inselnetz umfasst ist. Hierdurch kann eine zuverlässige Erfassung bzw. Überwachung der Netzfrequenz realisiert werden. Es kann vorgesehen sein, dass mehr als ein Spannungssensor, insbesondere wenigstens zwei Spannungssensoren, zur Erfassung der Netzfrequenz vorgesehen ist bzw. sind. Hierdurch kann eine Redundanz in Bezug auf die Überwachung der Netzfrequenz geschaffen werden und die Zuverlässigkeit der Netzersatzanlage erhöht werden.

Im Rahmen der Erfindung ist es denkbar, dass durch das Unterstützungsaggregat eine elektrische Maximalleistung bereitstellbar ist, welche zwischen 10 % und 50 % einer durch den Motorgenerator bereitstellbaren elektrischen Maximalleistung entspricht. Eine solche Dimensionierung des Unterstützungsaggregats hat sich als vorteilhaft in Bezug auf eine zuverlässige Stabilisierung der Netzfrequenz sowie ferner einen kompakten Aufbau der Netzersatzanlage als vorteilhaft erwiesen.

Es kann im Rahmen der Erfindung vorgesehen sein, dass der Energiespeicher derart dimensioniert ist, dass eine durch das Unterstützungsaggregat bereitstellbare elektrische Maximalleistung über einen Zeitraum von wenigstens einer Minute und/oder maximal 10 Minuten bereitstellbar ist. In anderen Worten kann vorgesehen sein, dass eine durch den Energiespeicher aufnehmbare Energiemenge ausreicht, um eine durch das Unterstützungsaggregat bereitstellbare elektrische Maximalleistung über einen Zeitraum von wenigstens einer Minute und/oder maximal 10 Minuten bereitzustellen. Eine solche Dimensionierung des Energiespeichers hat sich in Bezug auf eine zuverlässige Energieversorgung des Inselnetzes durch die Netzersatzanlage als vorteilhaft erwiesen.

Es ist ferner denkbar, dass das Unterstützungsaggregat ferner ein Ladegerät zur Aufladung des Energiespeichers umfasst, wobei insbesondere eine Ladeleistung des Ladegeräts maximal 20 % einer durch den Motorgenerator bereitstellbaren elektrischen Maximalleistung des Motorgenerators beträgt. Eine solche Dimensionierung der Ladeleistung hat sich als vorteilhaft in Bezug auf eine zuverlässige Energieversorgung des Inselnetzes während eines Ladevorgangs erwiesen.

Gemäß einem dritten Aspekt betrifft die vorliegende Erfindung ferner ein Inselnetz, wobei das Inselnetz wenigstens eine Netzersatzanlage zur Bereitstellung einer elektrischen Nutzleistung in dem Inselnetz umfasst, wobei die Netzersatzanlage als eine Netzersatzanlage gemäß dem zweiten Aspekt der vorliegenden Erfindung ausgebildet ist. Damit ergeben sich in Bezug auf ein erfindungsgemäßes Inselnetz die gleichen Vorteile, wie sie bereits in Bezug auf ein erfindungsgemäßes Verfahren und/oder eine erfindungsgemäße Netzersatzanlage beschrieben wurden.

Gemäß einem vierten Aspekt betrifft die vorliegende Erfindung ferner ein Computerprogrammprodukt, umfassend Befehle, die bewirken, dass eine Netzersatzanlage gemäß dem zweiten Aspekt der vorliegenden Erfindung ein Verfahren gemäß dem ersten Aspekt der vorliegenden Erfindung ausführt. Damit ergeben sich in Bezug auf ein erfindungsgemäßes Computerprogrammprodukt die gleichen Vorteile, wie sie bereits in Bezug auf ein erfindungsgemäßes Verfahren und/oder eine erfindungsgemäße Netzersatzanlage und/oder ein erfindungsgemäßes Inselnetz beschrieben worden sind.

Gemäß einem fünften Aspekt betrifft die vorliegende Erfindung ein computerlesbares Speichermedium, auf dem ein Computerprogrammprodukt gemäß dem vierten Aspekt der vorliegenden Erfindung gespeichert ist. Damit ergeben sich in Bezug auf ein erfindungsgemäßes computerlesbares Speichermedium die gleichen Vorteile, wie sie bereits in Bezug auf ein erfindungsgemäßes Verfahren und/oder eine erfindungsgemäße Netzersatzanlage und/oder ein erfindungsgemäßes Inselnetz und/oder ein erfindungsgemäßes Computerprogrammprodukt beschrieben worden sind.

Gemäß einem sechsten Aspekt betrifft die vorliegende Erfindung ferner ein Datenträgersignal, das ein Computerprogrammprodukt gemäß dem vierten Aspekt der vorliegenden Erfindung überträgt. Damit ergeben sich in Bezug auf ein erfindungsgemäßes Datenträgersignal die gleichen Vorteile, wie sie bereits in Bezug auf ein erfindungsgemäßes Verfahren und/oder eine erfindungsgemäße Netzersatzanlage und/oder ein erfindungsgemäßes Inselnetz und/oder ein erfindungsgemäßes Computerprogrammprodukt und/oder ein erfindungsgemäßes computerlesbares Speichermedium beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigt
- Fig. 1: eine schematische Ansicht eines Verfahrens,
- Fig. 2: eine schematische Ansicht einer Netzersatzanlage,
- Fig. 3: eine schematische Ansicht eines Inselnetzes,
- Fig. 4: eine schematische Ansicht eines Frequenz- bzw. Leistungsverlaufs und
- Fig. 5: eine schematische Ansicht einer frequenzabhängigen Leistungsabgabe.

In den Figuren werden für die gleichen technischen Merkmale, auch von unterschiedlichen Ausführungsbeispielen, die identischen Bezugszeichen verwendet.

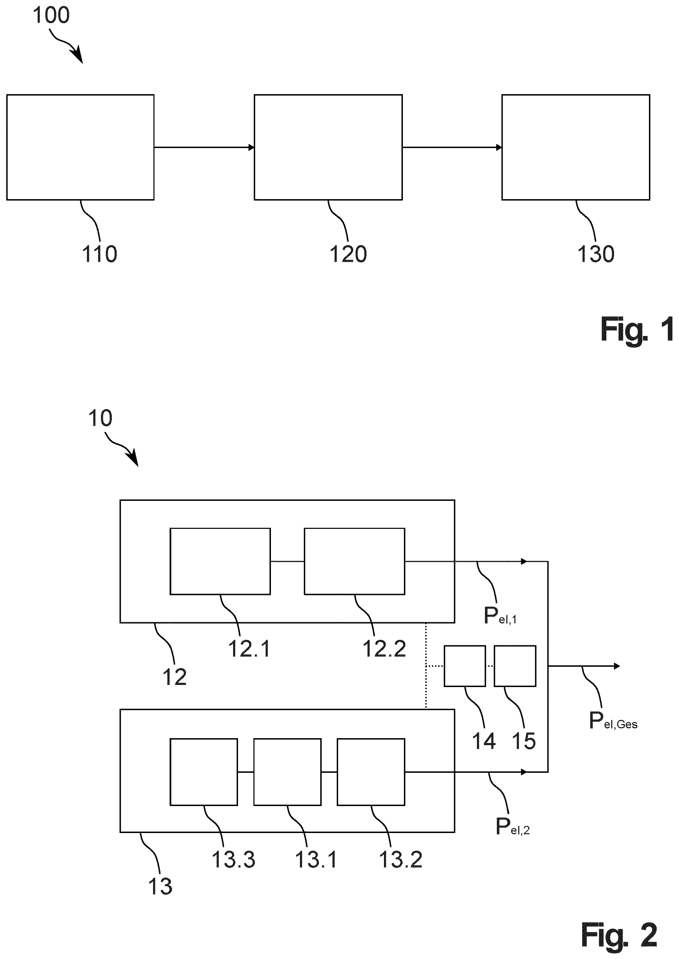

Die Fig. 1 zeigt eine schematische Ansicht eines Verfahrens 100 zum Betrieb einer Netzersatzanlage 10 zur, insbesondere temporären, Bereitstellung einer elektrischen Nutzleistung P_{el,Ges} in einem Inselnetz 50, umfassend wenigstens einen Motorgenerator 12 zur Bereitstellung einer ersten elektrischen Leistung P_{el,1} sowie wenigstens ein Unterstützungsaggregat 13 zur Bereitstellung einer zweiten elektrischen Leistung P_{el,2}, wobei das Unterstützungsaggregat 13 wenigstens einen elektrischen Energiespeicher 13.1 zur Bereitstellung der zweiten elektrischen Leistung P_{el,2} umfasst, das Verfahren 100 umfassend:
- Bereitstellen 110 einer ersten elektrischen Leistung P_{el,1} durch den Motorgenerator 12,
- Erfassen 120 einer Netzfrequenz f in dem Inselnetz 50, insbesondere durch wenigstens einen Spannungssensor 15,
- Bereitstellen 130 einer zweiten elektrischen Leistung P_{el,2} durch das Unterstützungsaggregat 13, wenn die Netzfrequenz f einen oberen Netzfrequenzgrenzwert f_{G,O} erreicht oder unterschreitet.

Die Fig. 2 zeigt ferner eine schematische Ansicht einer Netzersatzanlage 10 zur, insbesondere temporären, Bereitstellung einer elektrischen Nutzleistung P_{el,Ges} in einem Inselnetz 50, umfassend wenigstens einen Motorgenerator 12 zur Bereitstellung einer ersten elektrischen Leistung P_{el,1} sowie wenigstens ein Unterstützungsaggregat 13 zur Bereitstellung einer zweiten elektrischen Leistung P_{el,2}, wobei das Unterstützungsaggregat 13 wenigstens einen elektrischen Energiespeicher 13.1 zur Bereitstellung der zweiten elektrischen Leistung P_{el,2} umfasst.

Ferner umfasst das Unterstützungsaggregat 13 wenigstens einen Wechselrichter 13.2 zur Umwandlung einer durch den elektrischen Energiespeicher 13.1 bereitgestellten Gleichspannung in Wechselspannung sowie ein Ladegerät 13.3 zur Aufladung des Energiespeichers 13.1.

Aus Fig. 2 wird ferner ersichtlich, dass ferner eine Steuereinheit 14, durch die zumindest die Bereitstellung der zweiten elektrischen Leistung P_{el,2} steuerbar ist, sowie ein Spannungssensor 15 zur Erfassung einer Netzfrequenz f in dem Inselnetz 50 umfasst ist.

Es kann bevorzugt vorgesehen sein, dass das Unterstützungsaggregat 13 und der Motorgenerator 12 in einem gemeinsamen Gehäuse angeordnet sind, sodass die Netzersatzanlage 10 als eine transportable Einheit ausgebildet ist.

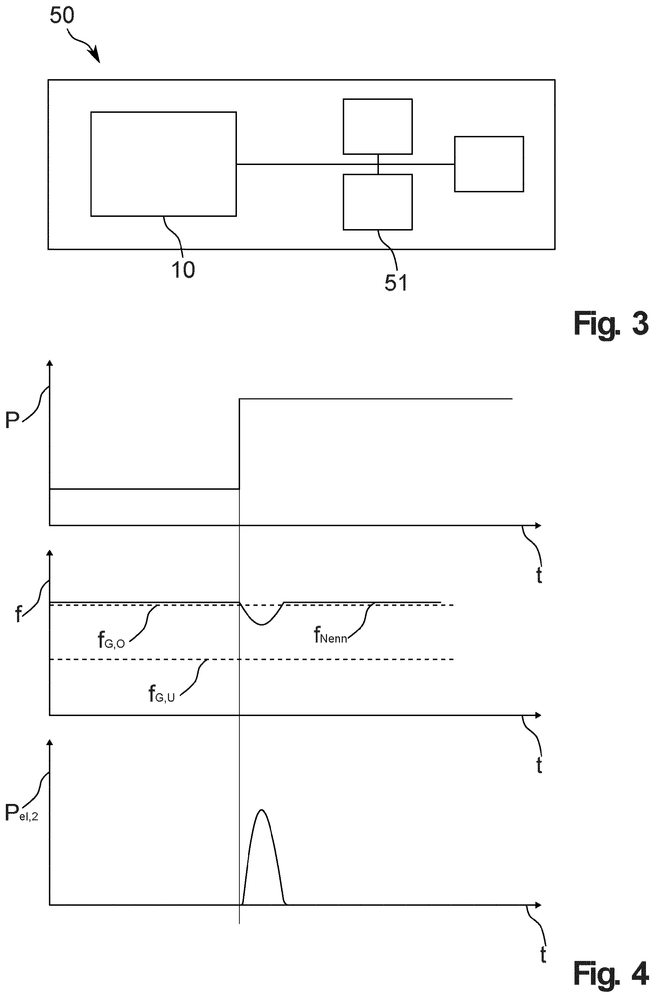

Fig. 3 zeigt ferner eine schematische Ansicht eines Inselnetzes 50, umfassend wenigstens eine Netzersatzanlage 10 gemäß dem zweiten Aspekt der vorliegenden Erfindung. Das Inselnetz 50 umfasst ferner wenigstens einen elektrischen Verbraucher 51, welcher durch die Netzersatzanlage 10 mit elektrischer Energie versorgt wird und somit eine elektrische Last P ausbildet.

Fig. 4 zeigt ferner eine schematische Ansicht eines Frequenz- bzw. Leistungsverlaufs. Aufgetragen sind jeweils über der Zeit t die in dem Inselnetz 50 anliegende elektrische Last P, die Netzfrequenz f des Inselnetzes 50 sowie die durch das Unterstützungsaggregat 13 bereitgestellte zweite elektrische Leistung P_{el,2}.

Es wird aus Fig. 4 ersichtlich, dass ein sprunghafter Anstieg der in dem Inselnetz 50 anliegenden elektrischen Last P zu einem von der Nennnetzfrequenz f_{Nenn} des Inselnetzes 50 ausgehenden Abfall der Netzfrequenz f führt. Vorliegend wird bei einem Erreichen oder Unterschreiten eines oberen Netzfrequenzgrenzwerts f_{G,O} durch das Unterstützungsaggregat 13 eine zweite elektrische Leistung P_{el,2} bereitgestellt. Hierdurch wird die Netzfrequenz f stabilisiert und ein weiteres Absinken der Netzfrequenz f verhindert. Die durch den Motorgenerator 12 bereitgestellte erste elektrische Leistung P_{el,1} kann in der Folge bedarfsgerecht nachgeregelt und die durch das Unterstützungsaggregat 13 bereitgestellte zweite elektrische Leistung P_{el,2} entsprechend wieder abgesenkt werden.

So kann ein Absinken der Netzfrequenz f auf oder unterhalb einen unteren Netzfrequenzgrenzwert f_{G,U} und somit eine Notabschaltung des Inselnetzes 50 bzw. der Netzersatzanlage 10 vermieden werden.

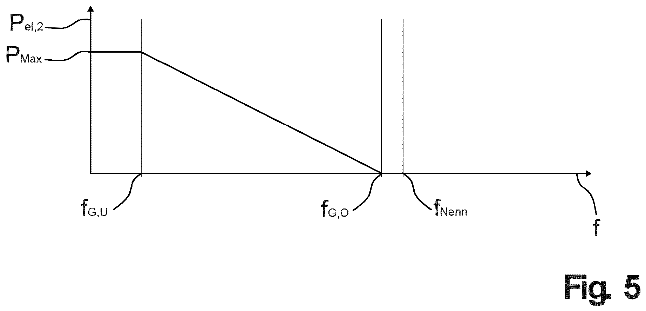

Fig. 5 zeigt ferner eine schematische Ansicht einer frequenzabhängigen Leistungsabgabe des Unterstützungsaggregats 13. Es wird ersichtlich, dass die Höhe der bereitgestellten zweiten elektrischen Leistung P_{el,2} in Abhängigkeit der Netzfrequenz f bestimmt wird, wobei die zweite elektrische Leistung P_{el,2} mit abnehmender Netzfrequenz f linear, gesteigert wird. Dabei erreicht die zweite elektrische Leistung P_{el,2} ihr Maximum P_{Max} bei dem unteren Netzfrequenzgrenzwert f_{G,U}.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Netzersatzanlage
- 12: Motorgenerator
- 12.1: Verbrennungsmotor
- 12.2: Generator
- 13: Unterstützungsaggregat
- 13.1: Energiespeicher
- 13.2: Wechselrichter
- 13.3: Ladegerät
- 14: Steuereinheit
- 15: Spannungssensor
- 50: Inselnetz
- 51: elektrischer Verbraucher
- 100: Verfahren
- 110: Bereitstellen
- 120: Erfassen
- 130: Bereitstellen
- f: Netzfrequenz
- f_{G,O}: Netzfrequenzgrenzwert
- f_{G,U}: Netzfrequenzgrenzwert
- f_{Nenn}: Nennnetzfrequenz
- P: elektrische Leistung / Last
- P_{el,1}: erste elektrische Leistung
- P_{el,2}: zweite elektrische Leistung
- P_{el,Ges}: Nutzleistung
- P_{Max}: Maximalleistung
- t: Zeit

## Patentansprüche

1. Verfahren (100) zum Betrieb einer Netzersatzanlage (10) zur, insbesondere temporären, Bereitstellung einer elektrischen Nutzleistung (P_{el,Ges}) in einem Inselnetz (50), umfassend wenigstens einen Motorgenerator (12) zur Bereitstellung einer ersten elektrischen Leistung (P_{el,1}) sowie wenigstens ein Unterstützungsaggregat (13) zur Bereitstellung einer zweiten elektrischen Leistung (P_{el,2}), wobei das Unterstützungsaggregat (13) wenigstens einen elektrischen Energiespeicher (13.1) zur Bereitstellung der zweiten elektrischen Leistung (P_{el,2}) umfasst, das Verfahren (100) umfassend:
- Bereitstellen (110) einer ersten elektrischen Leistung (P_{el,1}) durch den Motorgenerator (12),
- Erfassen (120) einer Netzfrequenz (f) in dem Inselnetz (50), insbesondere durch wenigstens einen Spannungssensor (15),
- Bereitstellen (130) einer zweiten elektrischen Leistung (P_{el,2}) durch das Unterstützungsaggregat (13), wenn die Netzfrequenz (f) einen oberen Netzfrequenzgrenzwert (f_{G,O}) erreicht oder unterschreitet.

2. Verfahren (100) nach Anspruch 1,
**dadurch gekennzeichnet,**
**dass** der obere Netzfrequenzgrenzwert (f_{G,O}) kleiner ist als eine Nennnetzfrequenz (f_{Nenn}) des Inselnetzes (50), wobei insbesondere der obere Netzfrequenzgrenzwert (f_{G,O}) zwischen 49,2 Hz und 49,9 Hz beträgt.

3. Verfahren (100) nach einem der vorhergehenden Ansprüche,
**dadurch gekennzeichnet,**
**dass** die Höhe der bereitgestellten zweiten elektrischen Leistung (P_{el,2}) in Abhängigkeit der Netzfrequenz (f) bestimmt wird, wobei insbesondere die zweite elektrische Leistung (P_{el,2}) mit abnehmender Netzfrequenz (f), insbesondere linear, gesteigert wird.

4. Verfahren (100) nach Anspruch 3,
**dadurch gekennzeichnet,**
**dass** die zweite elektrische Leistung (P_{el,2})bei einem unteren Netzfrequenzgrenzwert (f_{G,U}) ihr Maximum erreicht, wobei insbesondere der untere Netzfrequenzgrenzwert (f_{G,U}) 47 Hz beträgt.

5. Verfahren (100) nach einem der vorhergehenden Ansprüche,
**dadurch gekennzeichnet,**
**dass** ferner Folgendes umfasst ist:
- Durchführen einer Notabschaltung der Netzersatzanlage (10), wenn die Netzfrequenz (f) einen unteren Netzfrequenzgrenzwert (f_{G,U}) erreicht oder unterschreitet und/oder
- Aufladen des elektrischen Energiespeichers (13.1) in einem Zeitraum, in dem die Netzfrequenz (f) größer oder gleich dem oberen Netzfrequenzgrenzwert (f_{G,O}) ist, insbesondere durch ein Ladegerät (13.3) des Unterstützungsaggregats (13).

6. Netzersatzanlage (10) zur, insbesondere temporären, Bereitstellung einer elektrischen Nutzleistung (P_{el,Ges}) in einem Inselnetz (50), umfassend wenigstens einen Motorgenerator (12) zur Bereitstellung einer ersten elektrischen Leistung (P_{el,1}) sowie wenigstens ein Unterstützungsaggregat (13) zur Bereitstellung einer zweiten elektrischen Leistung (P_{el,2}),
wobei das Unterstützungsaggregat (13) wenigstens einen elektrischen Energiespeicher (13.1) zur Bereitstellung der zweiten elektrischen Leistung (P_{el,2}) umfasst und/oder, dass die Netzersatzanlage (10) dazu ausgebildet ist, gemäß einem Verfahren (100) nach einem der Ansprüche 1 bis 5 betrieben zu werden.

7. Netzersatzanlage (10) nach Anspruch 6,
**dadurch gekennzeichnet,**
**dass** der Motorgenerator (12) einen Verbrennungsmotor (12.1) sowie einen Generator (12.2) umfasst, wobei insbesondere der Generator (12.2) als ein Wechselspannungsgenerator und/oder, der Verbrennungsmotor (12.1) als ein Wasserstoffverbrennungsmotor ausgebildet ist.

8. Netzersatzanlage (10) nach einem der Ansprüche 6 bis 7,
**dadurch gekennzeichnet,**
**dass** das Unterstützungsaggregat (13) wenigstens einen Wechselrichter (13.2) zur Umwandlung einer durch den elektrischen Energiespeicher (13.1) bereitgestellten Gleichspannung in Wechselspannung umfasst und/oder, dass wenigstens eine Steuereinheit (14) umfasst ist, wobei durch die Steuereinheit (14) eine Bereitstellung der zweiten elektrischen Leistung (P_{el,2})steuerbar ist.

9. Netzersatzanlage (10) nach einem der Ansprüche 6 bis 8,
**dadurch gekennzeichnet,**
**dass** wenigstens ein Spannungssensor (15) zur Erfassung einer Netzfrequenz (f) in dem Inselnetz (50) umfasst ist.

10. Netzersatzanlage (10) nach einem der Ansprüche 6 bis 9,
**dadurch gekennzeichnet,**
**dass** durch das Unterstützungsaggregat (13) eine elektrische Maximalleistung (P_{Max}) bereitstellbar ist, welche zwischen 10 % und 50 % einer durch den Motorgenerator (12) bereitstellbaren elektrischen Maximalleistung (P_{Max}) entspricht und/oder, dass der Energiespeicher (13.1) derart dimensioniert ist, dass eine durch das Unterstützungsaggregat (13) bereitstellbare elektrische Maximalleistung (P_{Max}) über einen Zeitraum von wenigstens 10 Minuten bereitstellbar ist.

11. Netzersatzanlage (10) nach einem der Ansprüche 6 bis 10,
**dadurch gekennzeichnet,**
**dass** das Unterstützungsaggregat (13) ferner ein Ladegerät (13.3) zur Aufladung des Energiespeichers (13.1) umfasst, wobei insbesondere eine Ladeleistung des Ladegeräts (13.3) maximal 20 % einer durch den Motorgenerator (12) bereitstellbaren elektrischen Maximalleistung (P_{Max}) des Motorgenerators (12) beträgt.

12. Inselnetz (50), umfassend wenigstens eine Netzersatzanlage (10) zur Bereitstellung einer elektrischen Nutzleistung (P_{el,Ges}) in dem Inselnetz (50), wobei die Netzersatzanlage (10) gemäß einem der Ansprüche 6 bis 11 ausgebildet ist.

13. Computerprogrammprodukt, umfassend Befehle, die bewirken, dass eine Netzersatzanlage (10) nach einem der Ansprüche 6 bis 11 ein Verfahren (100) nach einem der Ansprüche 1 bis 5 ausführt.

14. Computerlesbares Speichermedium, auf dem ein Computerprogrammprodukt nach Anspruch 13 gespeichert ist.

15. Datenträgersignal, das ein Computerprogrammprodukt nach Anspruch 13 überträgt.
